# EUROPÄISCHE PATENTSCHRIFT

(11) **EP 0 750 024 B1**
(45) Veröffentlichungstag und Bekanntmachung des Hinweises auf die Patenterteilung: **01.03.2000**
(21) Anmeldenummer: 96108914.1
(22) Anmeldetag: 04.06.1996
(51) Int. Cl.: C09D 5/03, C09D 7/12, C08J 3/22, C08J 3/20

(54) **Rieselfähige Additivzubereitungen, Verfahren zu deren Herstellung und Verwendung in Pulverlacken**
Free-flowing additive compositions, process for their production and their use in powder coatings
Compositions d'additifs s'éculant bien, leur procédé de fabrication et leur utilisation dans des revêtements en poudre

(30) Priorität: 21.06.1995 DE 19522475
(43) Veröffentlichungstag der Anmeldung: 27.12.1996
(73) Patentinhaber: Byk-Chemie GmbH, 46483 Wesel (DE)
(72) Erfinder: Haubennestel, Karlheinz, 46487 Wesel (DE); Bubat, Alfred, 46487 Wesel-Bislich (DE)
(74) Vertreter: Leifert, Elmar, Dr.

(56) Entgegenhaltungen:
- EP-A- 0 088 370
- EP-A- 0 423 952
- EP-A- 0 537 006
- AU-B- 420 061
- US-A- 4 092 285
- DATABASE WPI Section Ch, Week 9114 Derwent Publications Ltd., London, GB; Class A82, AN 91-098686 XP002028413 & JP 03 043 466 A (UBE INDUSTRIES KK) , 25.Februar 1991

## Beschreibung

Die Erfindung betrifft rieselfähige Additivzubereitungen in fester Form, die als Hilfsmittel insbesondere bei der Pulverlackfertigung eingesetzt werden.

Bei der Pulverlackfertigung werden vorwiegend feste Stoffe wie grobgemahlene Kunstharze, Pigmente, Füllstoffe, Zusatzstoffkonzentrate (Masterbatches) und Härter zu einer Pulverlackformulierung gemischt und in dieser Form über einen Extrudiervorgang aufgeschmolzen und homogenisiert. Nach dem Extrudiervorgang wird die geschmolzene Pulverlackformulierung gekühlt und vermahlen.
Der Vorteil der Pulverlacke ist darin begründet, daß sie keine Lösemittel enthalten. Somit ist es notwendig, daß alle hierfür verwendeten Stoffe möglichst lösemittelfrei und in pulverförmiger bzw. fester, rieselfähiger Form eingesetzt werden.

Es ist bekannt, daß Pulverlacke eine Reihe von Zusatzstoffen enthalten können, die z. B. zur Reduzierung der hohen Schmelzviskosität, Reduzierung der Oberflächenspannung, besseren Entlüftung, Verbesserung des Verlaufs, Erhöhung des Glanzes und Verbesserung des Pigmentdispergierverhaltens eingesetzt werden.
Die meisten dieser Zusatzstoffe, die bei der Herstellung von Pulverlacken eingesetzt werden, sind jedoch nur in flüssiger oder hochviskoser Form erhältlich und müssen in eine für die Pulverlacktechnologie anwendbare Form gebracht werden.

Um diese Stoffe in eine für die Pulverlackherstellung geeignete Form zu überführen, werden verschiedene Verfahren angewendet.
Die heute üblichen Verfahren sind zum einen die Herstellung von sogenannten Zusatzstoffkonzentraten (Masterbatch). Hierbei werden die meist flüssigen Zusatzstoffe in die entsprechenden Pulverlackharze eingeschmolzen und dann nach Erstarren der Schmelze zu Pulvern gemahlen bzw. zu groben Partikeln zerkleinert. Diese additivhaltigen Pulver werden dann der Pulverlackformulierung als Hilfsmittel vor dem Extrudieren zugesetzt.

Ein Nachteil dieses Verfahrens ist darin zu sehen, daß nur ca. 10 % der flüssigen oder weichharzartigen Komponenten dem Pulverlackharz zugesetzt werden können, ohne daß ein Verkleben dieser Zusatzstoffkonzentrate verursacht wird. Ein weiterer Nachteil liegt darin, daß diese Zusatzstoffkonzentrate nicht universal eingesetzt werden können, da die zur Herstellung verwendeten Harze sehr spezifisch sind, und bei der Einbringung von Fremdharzen in Pulverlack-Formulierungen oft Störungen zu erwarten sind. Dies ist z. B. der Fall, wenn Zusatzstoffkonzentrate in Polyesterharzen hergestellt werden und diese dann in einem Acrylatharzpulverlack eingesetzt werden sollen.

Zum anderen werden Verfahren angewendet, bei denen die flüssigen Komponenten auf kapillaraktive Kieselsäuren aufgebracht werden, die in der Lage sind, ca. 60 % einer flüssigen Komponente aufzunehmen und dabei nicht den pulverförmigen Zustand zu verlieren (Deutsche Patentschrift 22 02 907).
Die so erzeugten pulverförmigen kieselsäurehaltigen Produkte werden auch "Dry Liquids" genannt. Diese Produkte geben bei Scherbeanspruchung und Temperatur, wie sie z. B. im Extruder auftritt, den Wirkstoff zumindest großteils wieder ab. Ein gewisser Anteil bleibt jedoch in der kapillaraktiven Kieselsäure adsorbiert und wird somit als aktive Wirksubstanz dem Verfahren entzogen.
Die Erfahrung zeigt, daß ca. 10 - 20 % der eingesetzten Wirksubstanz bei diesem Verfahren nicht aktiv als Hilfsmittel zur Verfügung steht. Ein weiterer Nachteil dieser "Dry Liquids" liegt in der Natur der relativ grob dispersen Kieselsäure begründet. Diese Kieselsäure wirkt wie vorhersehbar als Mattierungsmittel oder zumindest reduziert sie den Glanz in hochglänzenden Pulverlacksystemen, außerdem führt sie zu einer Trübung (Haze) in transparenten Pulverlacksystemen.

In neuster Zeit werden auch Versuche unternommen, die Mikroverkapselung als Mittel zu benutzen, flüssige Zusatzstoffe in eine feste Form zu überführen.
Diese Verfahren sind nicht wirtschaftlich, da dieses Herstellverfahren ein mehrfaches des Wertes der Wirksubstanz kostet, außerdem stören oft die für die Verkapselung benötigten vernetzten Polymeren, die in den Pulverlacken nicht mehr löslich sind und zu Trübungen führen können.

Aus der europäischen Patentanmeldung EP-A-0 537 006 ist es bekannt, eine flüssige oder hochviskose aktive Substanz in ein Bindemittel einzuarbeiten, um die aktive Substanz in eine feste Applikationsform zu überführen und damit deren Anwendungsmöglichkeiten zu erweitern und zu optimieren. Das Bindemittel enthält neben einem Wachs als zweiten Hauptbestandteil zwingend ein thermoplastisches Polymer. Hierdurch wird nachteilig eine weitere Komponente in das Produkt eingebracht, die bei der Anwendung des Produkts die Eigenschaften des entsprechenden Endprodukts beeinträchtigen kann.

Es ist Aufgabe der vorliegenden Erfindung, die geschilderten Nachteile des Standes der Technik zu vermeiden und rieselfähige Additivzubereitungen anzugeben, die problemlos bei der Pulverlackherstellung eingesetzt werden können. Eine weitere Aufgabe der Erfindung ist es, ein Verfahren zur Herstellung der rieselfähigen Additivzubereitungen bereitzustellen.
Überraschenderweise wurde gefunden, daß diese Aufgaben gelöst werden können, indem man die flüssigen oder hochviskosen Additive in Wachs einarbeitet.

Gegenstand der Erfindung sind nun rieselfähige Additivzubereitungen insbesondere für Pulverlacke, die dadurch erhältlich sind, daß ein oder mehrere flüssige oder viskos-klebrige Additive in eine aus einem oder mehreren Wachsen bestehende Wachsschmelze eingearbeitet werden, die erhaltene Mischung auf eine Temperatur unterhalb ihres Schmelzpunktes abgekühlt wird und die erstarrte Mischung zerkleinert wird oder die noch flüssige Mischung in eine feinteilige Form gebracht wird und die erhaltenen Teilchen abgekühlt werden. Zusätzlich zu der Hauptwachskomponente können in geringerer Menge modifizierende Wachse oder Emulgatoren eingesetzt werden.

Die Mischungen aus Wachs und Additiven werden nach bekannten Verfahren in Pulver überführt, wobei Sprühverfahren besonders geeignet sind, bei denen die Schmelzen fein verteilt im freien Fall, auch unterstützt durch entgegengeblasene kalte Luft (Spray-chilling) in feine oder feinste Partikel meist kugelförmiger Gestalt überführt werden.

Die Versprühung kann nach bekannten Verfahren entweder durch speziell geformte Sprühdüsen oder z. B. auch über rotierende, beheizte Scheiben in entsprechenden Sprühtürmen erfolgen.

Aber auch Verfahren, die zu groben Partikeln führen, sind geeignet, um die erfindungsgemäßen Additivzubereitungen herzustellen. Hier sind z. B. Verfahren zu nennen, bei denen die Schmelze von Wachs- und Zusatzstoff auf eine gekühlte Walze oder Kühlband gegeben wird und nach Erstarren der Schmelze die Mischung als tropfenförmiges Pellet oder als Chip gewonnen wird.
Oft reichen diese recht einfachen Verfahren aus, einen festen Zusatzstoff zu erhalten, der leicht dosiert werden kann.

Die Additivzubereitungen weisen vorteilhaft eine maximale Ausdehnung von 10 µm bis 3 cm auf, wobei kompakte oder annähernd kugelförmige Teilchen in der Regel Durchmesser von 10 µm bis 5 mm und Chips oder Blättchen Ausdehnungen von bis zu 3 cm aufweisen können.

Die Vorteile dieses erfindungsgemäßen Verfahrens bestehen in der ausgezeichneten Verteilung der Zusatzstoffkomponenten während des Extrudierens der Pulverlackmischung, da durch geeignete Auswahl von Wachsen einer dem Schmelzpunkt des Harzes angepaßten Schmelztemperatur, der Zusatzstoff komplett freigesetzt wird und dann homogen in der Pulverlackformulierung vorliegt.

Zusatzstoffe werden normalerweise in sehr kleinen Mengen zugesetzt, so daß die Homogenisierung solch kleiner Mengen in einer heterogenen Mischung oft Probleme bereitet. Dies wird nach diesem Verfahren ebenfalls deutlich verbessert, da die Freisetzung des Zusatzstoffes durch Schmelzen des Wachses sehr früh in der Extrudierphase geschieht.

Ein weiterer Vorteil dieses Verfahrens liegt darin, daß Wachse zusätzliche Vorteile bieten bezüglich Gleitfähigkeit und Abriebfestigkeit der fertig applizierten Pulverlacke, da Wachse sehr oft auch alleine als Zusatzstoffe eingesetzt werden.

Es ist zweckmäßig, ein Wachs auszuwählen, das im Schmelzpunkt mindestens 10 - 20 °C unterhalb der Verarbeitungstemperatur der Harzmischung im Extruder liegt, um eine möglichst frühzeitige Freisetzung der Zusatzstoffe zu erreichen. Damit ist eine optimale Verteilung während des oft nur sehr kurzen Extrudiervorganges gewährleistet.
Zum anderen sollte das Wachs keine zu niedrige Schmelztemperatur haben, um eine Lagerung der Zusatzstoffkonzentrate auch bei erhöhten Lagertemperaturen z. B. in warmen Ländern zu ermöglichen.
Als besonders vorteilhaft haben sich Wachse herausgestellt, die einen Schmelzpunkt von 50 °C bis 120 °C, insbesondere zwischen 80° C und 110 °C besitzen. Aber auch Mischungen unterschiedlicher Wachse mit unterschiedlichen Schmelzpunkten sind möglich.

Bei Wachsmischungen kann es jedoch vorteilhaft sein, auch Anteile von Wachsen zuzugeben, die einen höheren Schmelzpunkt haben, so z. B. bis 160 °C, um zusammen mit dem niedrig schmelzenden Wachs ganz spezielle Eigenschaften zu erreichen, wie z. B. Mattierung der Pulverlackoberfläche.

Geeignete Additive sind z. B. Lichtschutzmittel, Additive zur Verbesserung der Aufladbarkeit, Korrosionsschutzmittel, Katalysatoren, Inhibitoren, Effektmittel, Strukturmittel, Haftvermittler, Mattierungsmittel, Hydrophobierungsmittel, Hydrophilierungsmittel, die Oberflächenspannung regulierende Additive, Dispergiermittel, Netzmittel, Verlaufsmittel, Entschäumer, Entgaser, Antikratermittel, Gleitmittel, oder, unter Berücksichtigung ihrer chemischen Zusammensetzung, Polyacrylsäurester, Polymethacrylsäureester oder Copolymere aus Acryl (Methacryl-)säurederivaten, Polyvinylether, Dialkylpolysiloxane, Alkylarylpolysiloxane oder Silikoncopolymere (polyether- oder polyestermodifiziert). Geeignete Netz- und Dispergiermittel sind z. B. beschrieben in EP-A-154 678, EP-A-270 126, EP-A-318 999, DE-A-3 930 687, DE-A-1 157 326 und De-A-1 157 327.

Es ist möglich mehrere dieser Zusatzstoffe zu mischen, in die Wachse einzuschmelzen und nach dem beschriebenen Verfahren in eine feste Form zu überführen.

Es ist zweckmäßig den Gehalt an Additiv im Wachs so hoch wie möglich zu dosieren, um mit möglichst kleinen Mengen an der erfindungsgemäßen Additivzubereitung auszukommen.
Bevorzugt wird man Konzentrationen von 1 bis 60 Gew.-%, besonders bevorzugt 35 bis 55 % aktivem Zusatzstoff in der Wachsmischung anstreben.
Sollten bei recht hohen Konzentrationen an aktivem Zusatzstoff die erreichten Pulver leicht kleben und nicht mehr frei rieselfähig sein, genügt es, geringe Mengen einer z. B als Antibackmittel (Anticaking) oder als rieselfähigkeitsverbessernd bekannte feinteilige hydrophobe Kieselsäure dem Pulver während oder nach dem Sprühvorgang zuzusetzen. Es genügen hier meist Mengen von ca. 0,1 bis 3 Gew.-% dieser Kieselsäure, die in der Endanwendung nicht als störend empfunden werden.

Die Bezeichnung "Wachs" ist ein nicht genau definierter Begriff. Römpps Chemie Lexikon (8. Auflage, S. 4563) definiert Wachs als eine technologische Sammelbezeichnung für eine Reihe natürlich oder künstlich gewonnener Stoffe, genauso wie dies für die Sammelbezeichnung "Harze" gilt. Alle diese Wachse haben jedoch die Gemeinsamkeit, daß sie in der Regel zwischen 40 °C und 100 °C, teilweise auch darüber, in den schmelzflüssigen, niedrigviskosen Zustand übergehen. Eine Besonderheit der Wachse ist, daß sie beim Schmelzen abtropfen und keine Fäden ziehen, wie dies bei anderen Polymeren der Fall ist. Meist ist bei diesen Wachsen der paraffinische Charakter überwiegend.

Beispiele für geeignete Wachse sind Naturwachse und synthetische Wachse. Als Naturwachse kommen Mineralwachse, Pflanzenwachse, Tierwachse oder deren Mischungen in Betracht. Beispielhaft seien genannt Rohmontanwachs, Tafelparaffin, Microwachs, (Mekon® white) Vaseline, Carnaubawachs, Candelillawachs, Bienenwachs und Schellackwachs. Geeignete synthetische Wachse sind z. B. Fischer-Tropsch-Syntheseparaffin, Fischer-Tropsch Paraffinoxidat, Polyethylenwachs, Polypropylenwachs und deren Oxidate, Polycaprolactonwachs, Silikonwachse, Wachsalkohole, Polyethylenvinylacetatcopolymere, Polyethylenacrylsäurecopolymere, Polyglykolwachse und V-Wachs® (Polyvinylether).

Im folgenden wird die Erfindung anhand von Beispielen näher erläutert.

### 1. Herstellverfahren

### Allgemeine Beschreibung der Wachs/Additivmischungen

In einem beheizbaren Mischkessel werden die wachsartigen Komponenten vorgelegt und aufgeschmolzen. Die Temperatur der Wachsschmelze sollte etwa 10 - 30 °C oberhalb des Schmelzpunktes liegen. Nach Erreichen der Temperatur werden die flüssigen Komponenten unter Rühren zugegeben und homogenisiert. Bei zweiphasigen Systemen wird gegebenenfalls die Mischung vor Abkühlung mittels eines Dispergieraggregates intensiv dispergiert evtl. unter Zugabe von Emulgierhilfsmitteln. Über beheizte Rohrleitungen wird die Wachs/Additiv-Mischung dem entsprechenden Kühlaggregat wie z. B. Sprühturm oder Kühlband zugeführt.

**2.Rezepturen**

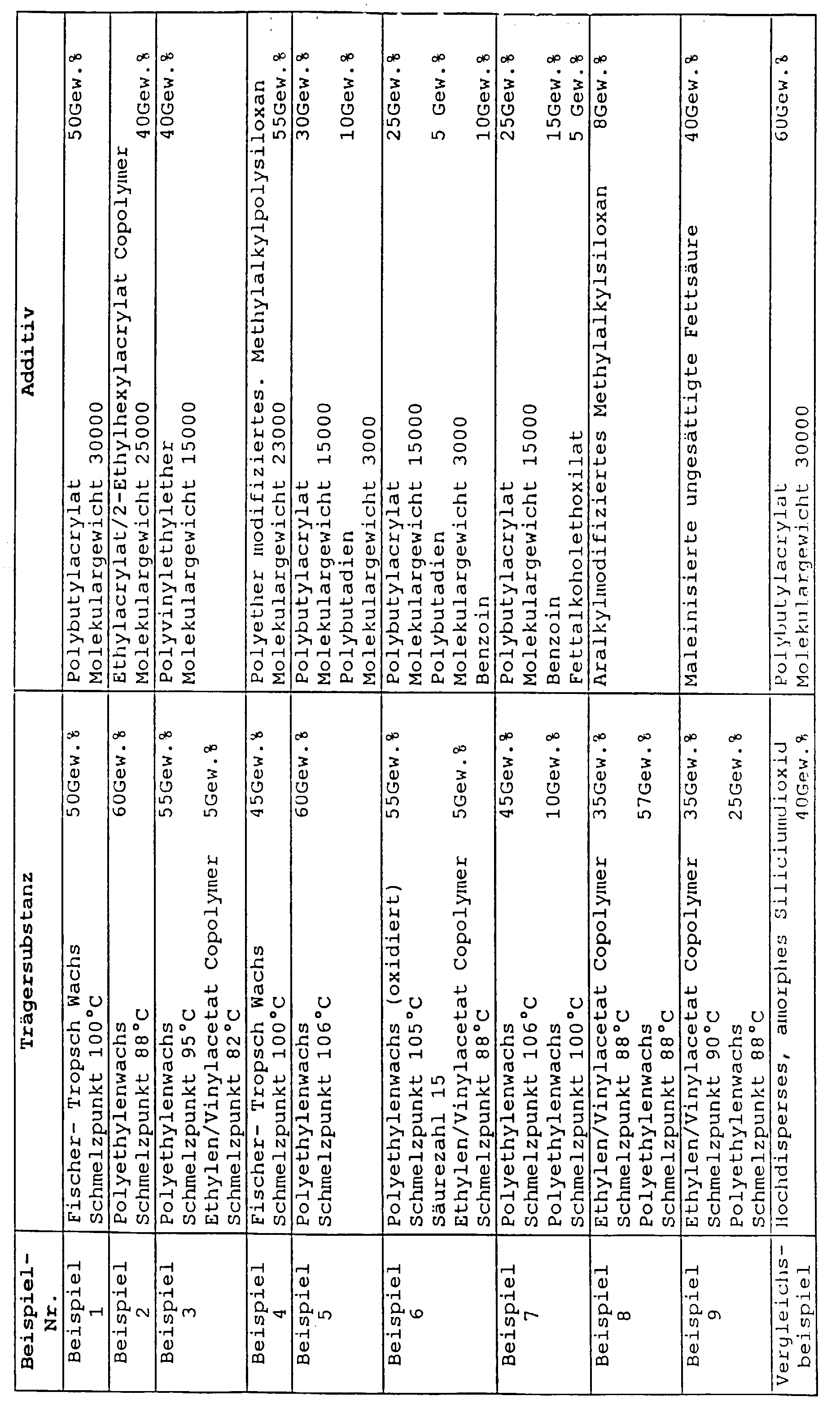

Als Prüfkriterien wurden die Reduzierung des Gleitwiderstandes, der Verlauf, die Antikraterwirkung und die Anzahl der Nadelstiche auf den Prüfblechen beurteilt.

Bei der Prüfung des Verlaufs wurde visuell gewertet, wobei besonderes Augenmerk auf die sogenannte "Orangenschalenstruktur" gerichtet wurde. Eine starke "Orangenschalenstruktur" wurde als negativ bewertet, eine glatte homogene Oberfläche als positiv. die Antikraterwirkung wurde visuell erfaßt und als positiv bewertet, wenn eine kraterfreie Beschichtung vorlag. Die Nadelstiche, hervorgerufen durch eine nicht einwandfreie Entgasung/Entschäumung während des Einbrennprozesses, wurden ebenfalls visuell erfaßt und als positiv beurteilt, wenn eine nadelstichfreie Beschichtung vorlag.

Für die Messung des Gleitwiderstandes wurde eine exakte Meßmethode angewandt, welche die früher angewandte "Fingernagelprobe" oder die Messung des Abgleitwinkels von zylindrischen Körpern auf der Beschichtung ablöst und im folgenden beschrieben ist.

Verwendet wurde ein elektrisches Filmaufziehgerät mit konstantem Vorschub. Auf der Halterung für das Filmziehlineal wurde ein Zugdruck-Kraftaufnehmer befestigt, der über einen Meßverstärker auf einen Schreiber jeden Widerstand aufzeichnet, der dem Gleitkörper entgegensteht. Der Gleitkörper wird in Zug- oder Druckrichtung über die zu messende Oberfläche bewegt. Als Gleitkörper wurden Gewichtssteine verwendet, deren Gleitfläche aus drei auf der Unterseite des Gewichtssteins fest montierten Stahlkugeln bestand.

Der Gleitwert gibt die prozentuale Reduzierung des Gleitwiderstandes in Prozent, gemessen im Vergleich zu einer nicht mit Additiv versehenen Probe, an.

### Bewertung:

Verlauf
   - 1 =: sehr guter Verlauf
   - 2 =: guter Verlauf
   - 3 =: schlechter Verlauf
Antikraterwirkung
   - 1 =: keine Krater
   - 2 =: wenige Krater
   - 3 =: viele Krater
Anzahl Nadelstiche
   - 1 =: keine Nadelstiche
   - 2 =: wenige Nadelstiche
   - 3 =: viele Nadelstiche

### 3. Allgemeine Beschreibung der Anwendungstechnik

Die Pulverlacke wurden unter Zusatz von x % Additiv in einem Taumelmischer vermischt; die Mischung wurde anschließend extrudiert, granuliert, vermahlen und gesiebt. Die erhaltenen Pulverlacke wurden elektrostatisch auf eine Metalloberfläche gebracht und 12 Minuten bei 180 °C eingebrannt.

### 4. Lackrezepturen

| a) Polyesterlack | |
|---|---|
| Polyesterharz (SZ ca. 37) (carboxylgruppenhaltig) | 64,2 Gew.-% |
| Triglycidylisocyanurat | 4,8 Gew.-% |
| Titandioxid | 31,0 Gew.-% |

| b) Polyester/Epoxid-Hybridlack | |
|---|---|
| Polyesterharz (SZ ca. 73) (carboxylgruppenhaltig) | 29,07 Gew.-% |
| Epoxidharz (Epoxiequivalent ca. 775) | 28,77 Gew.-% |
| Titandioxid | 31,00 Gew.-% |
| Beschleuniger | 1,16 Gew.-% |

| c) Epoxidlack | |
|---|---|
| Epoxidharz (Epoxidwert ca. 0,12) | 56,95 Gew.-% |
| Härter (Dicyandiamid) | 2,55 Gew.-% |
| Titandioxid | 40,00 Gew.-% |

### 5. Ergebnisse

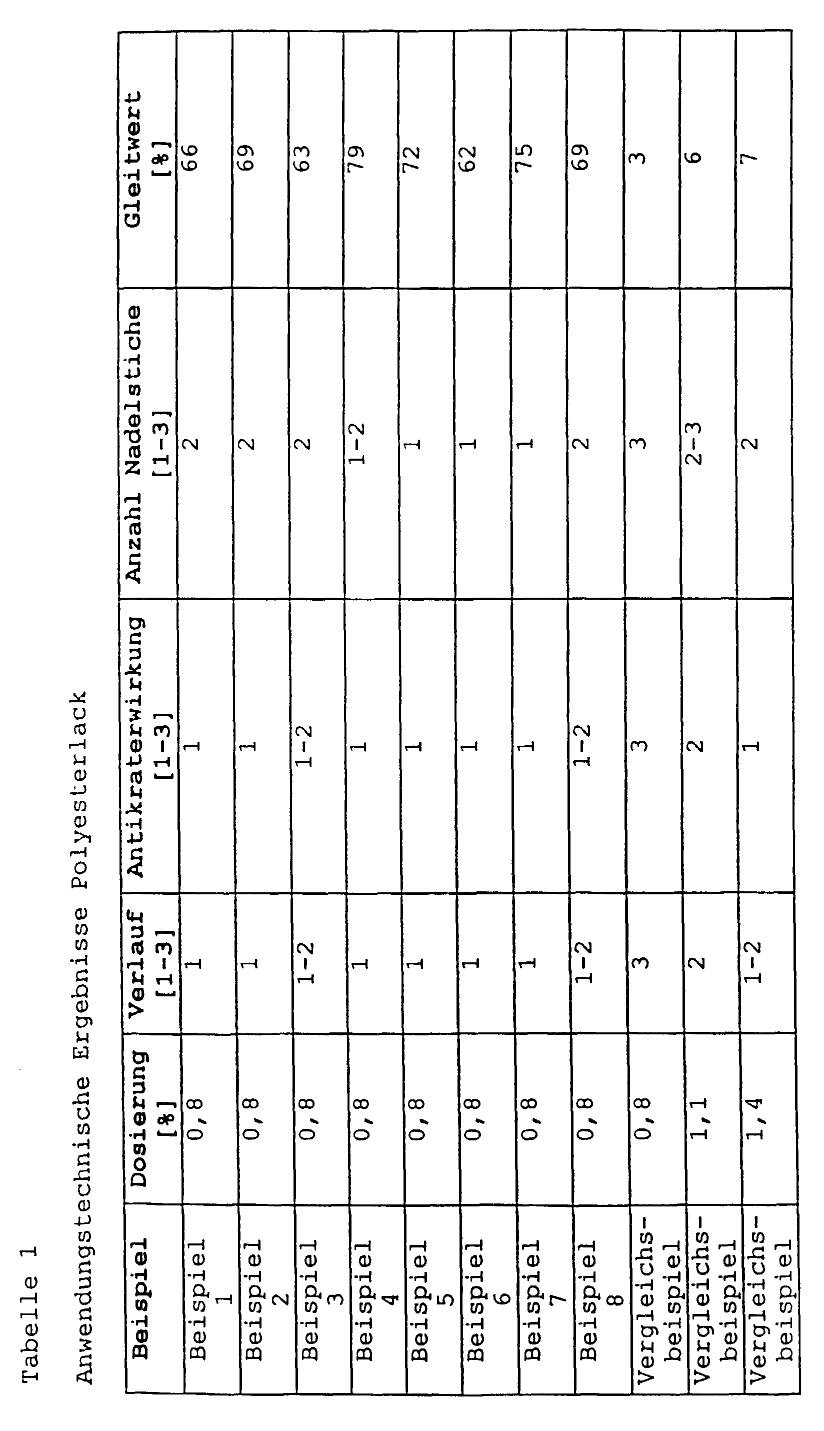

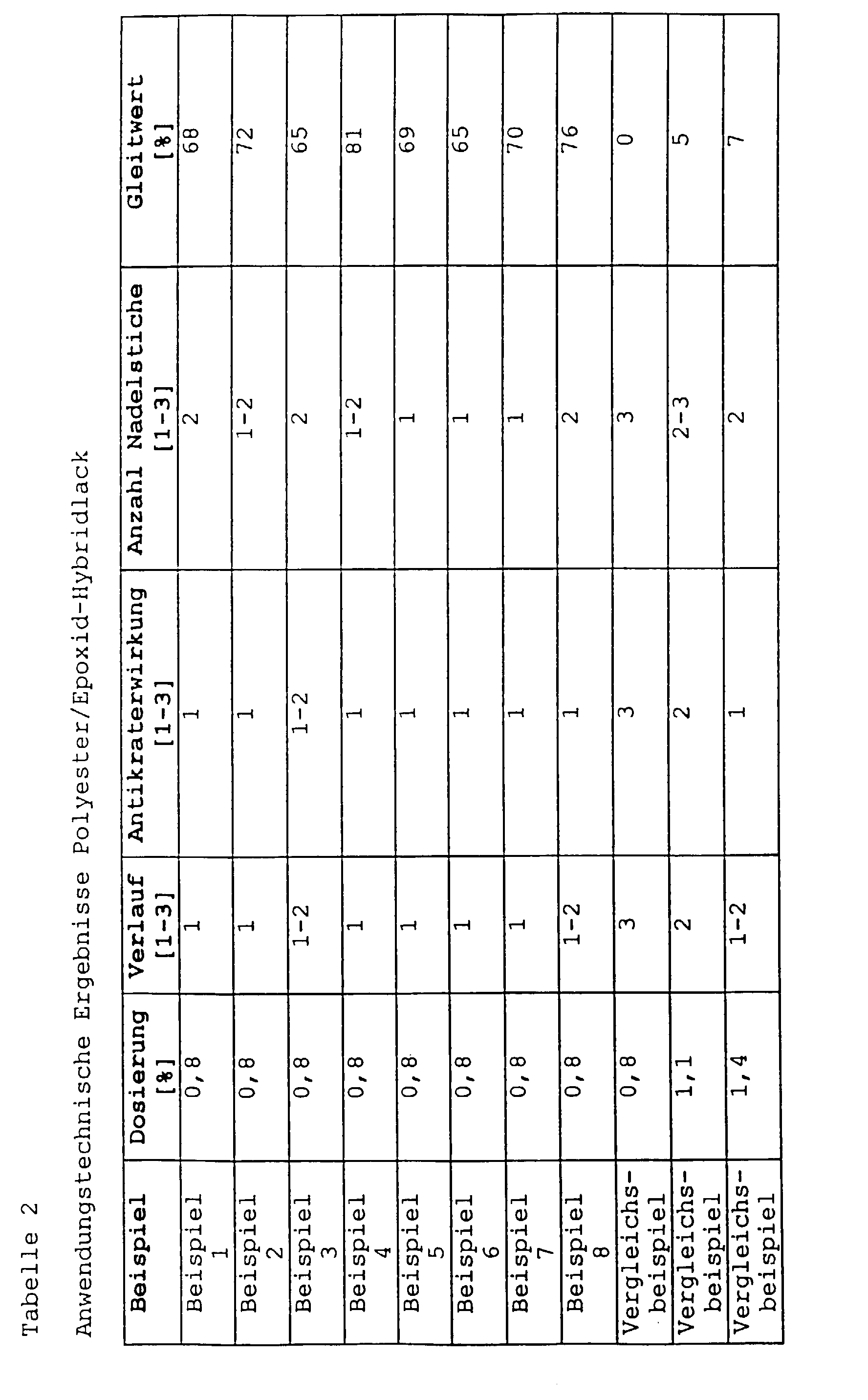

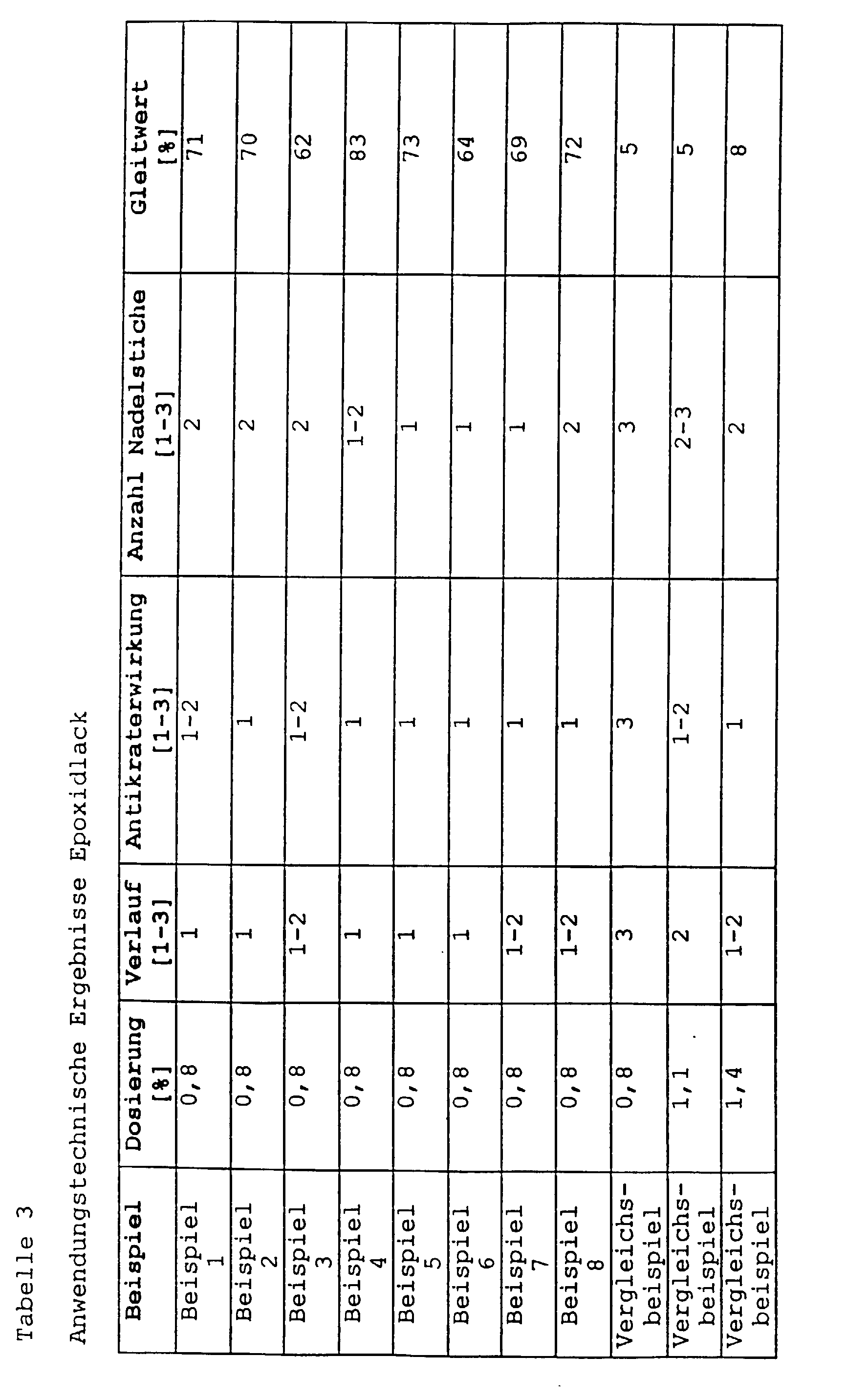

Das Beispiel 9 wurde in Kombination mit Beispiel 6 zur Überprüfung der Netz- und Dispergiereigenschaften in der Polyesterlackrezeptur zu einem Pulverlack verarbeitet. Die Netz- und Dispergierwirkung des Produktes wurde über die Deckkraft des Lackes bei unterschiedlichen Schichtdicken überprüft. Je niedriger die Schichtdicke ist, bei der keine Farbunterschiede auf einem Kontrastuntergrund mehr meßbar sind, desto besser ist die Netz- und Dispergiereigenschaft des eingesetzten Additivs.

Hierzu wurde der Pulverlack mit unterschiedlichen Schichtdicken auf einen schwarzweißen Kontrastuntergrund aufgebracht und 12 Minuten bei 180 °C eingebrannt. Anschließend wurde diejenige Schichtdicke ermittelt, bei der keine Farbtonunterschiede mehr zwischen weißem und schwarzem Untergrund meßbar waren.

| **Beispiel- Nr.** | **Dosierung [%]** | **Notwendige Schichtdicke für optimale Deckkraft** |
|---|---|---|
| Beispiel 6 | 0,8 | 70 µm |
| Beispiel 6 | 0,8 | 55 µm |
| Beispiel 9 | 1,5 | |

Die vorstehenden Beispiele und Vergleichsbeispiele zeigen, daß durch die erfindungsgemäßen Additivzubereitungen vorteilhafte Ergebnisse erzielt werden. Hierbei ist es auch als ein Vorteil anzusehen, daß durch die Erfindung die Einsatzmenge an Additiven reduziert werden kann im Vergleich zu herkömmlichen Additiven.

## Patentansprüche

1. Rieselfähige Additivzubereitungen insbesondere für Pulverlacke, die dadurch erhältlich sind, daß ein oder mehrere flüssige oder viskos-klebrige Additive in eine aus einem oder mehreren Wachsen bestehende Wachsschmelze eingearbeitet werden, die erhaltene Mischung auf eine Temperatur unterhalb ihres Schmelzpunktes abgekühlt wird und die erstarrte Mischung zerkleinert wird oder die noch flüssige Mischung in eine feinteilige Form gebracht wird und die erhaltenen Teilchen abgekühlt werden.

2. Additivzubereitungen nach Anspruch 1, dadurch gekennzeichnet, daß sie 1 bis 60 Gew.-% Additiv und 99 bis 40 Gew.-% Wachs enthalten, wobei die Summe der Bestandteile 100 Gew.-% beträgt.

3. Additivzubereitungen nach Anspruch 2, dadurch gekennzeichnet, daß sie 35 bis 55 Gew.-% Additiv und 65 bis 45 Gew.-% Wachs enthalten, wobei die Summe der Bestandteile 100 Gew.-% beträgt.

4. Additivzubereitungen nach einem der Ansprüche 1 bis 3, dadurch gekennzeichnet, daß das oder die Wachse einen Schmelzpunkt von 50 bis 120 °C aufweisen.

5. Additivzubereitungen nach einem der Ansprüche 1 bis 4, dadurch gekennzeichnet, daß die Additive Lichtschutzmittel, Additive zur Verbesserung der Aufladbarkeit, Korrosionsschutzmittel, Katalysatoren, Inhibitoren, Effektmittel, Strukturmittel, Haftvermittler, Mattierungsmittel, Hydrophobierungsmittel, Hydrophilierungsmittel, die Oberflächenspannung regulierende Additive, Dispergiermittel, Netzmittel, Verlaufsmittel, Entschäumer, Entgaser, Antikratermittel, Gleitmittel, Polyacrylsäureester, Polymethacrylsäureester, Copolymere aus (Meth)acrylsäurederivaten, Polyvinylether, Dialkylpolysiloxane, Alkylarylpolysiloxane oder Siliconpolymere sind.

6. Additivzubereitungen nach einem der Ansprüche 1 bis 5, dadurch gekennzeichnet, daß die Teilchen eine maximale Ausdehnung von 10 µm bis 3 cm aufweisen.

7. Additivzubereitungen nach einem der Ansprüche 1 bis 6, dadurch gekennzeichnet, daß sie 0,1 bis 5 Gew.-% Kieselsäure bezogen auf das Gesamtgewicht von Additiven, Wachs und Kieselsäure enthalten.

8. Verfahren zur Herstellung von rieselfähigen Additivzubereitungen insbesondere für Pulverlacke, dadurch gekennzeichnet, daß ein oder mehrere flüssige oder viskos-klebrige Additive in eine aus einem oder mehreren Wachsen bestehende Wachsschmelze eingearbeitet werden, die erhaltene Mischung auf eine Temperatur unterhalb ihres Schmelzpunktes abgekühlt wird und die erstarrte Mischung zerkleinert wird oder die noch flüssige Mischung in eine feinteilige Form gebracht wird und die erhaltenen Teilchen abgekühlt werden.

9. Verfahren nach Anspruch 8, dadurch gekennzeichnet, daß die Mischung aus Additiven und Wachs durch eine Sprühkühlung abgekühlt wird.

10. Verfahren nach Anspruch 8, dadurch gekennzeichnet, daß die Mischung mittels eines Kühlbandes oder einer gekühlten Walze abgekühlt wird.

11. Verwendung von rieselfähigen Additivzubereitungen, die dadurch erhältlich sind, daß ein oder mehrere flüssige oder viskos-klebrige Additive in eine aus einem oder mehreren Wachsen bestehende Wachsschmelze eingearbeitet werden, die erhaltene Mischung auf eine Temperatur unterhalb ihres Schmelzpunktes abgekühlt wird und die erstarrte Mischung zerkleinert wird oder die noch flüssige Mischung in eine feinteilige Form gebracht wird und die erhaltenen Teilchen abgekühlt werden, als Additive in Pulverlacken.

## Claims

1. Free-flowing additive preparations, in particular for powder coatings, which are obtainable by incorporating one or more liquid or viscous-tacky additives into a wax melt consisting of one or more waxes, cooling the mixture obtained to a temperature below its melting point and crushing the solidified mixture or converting the still liquid mixture into a finely divided form and cooling the particles obtained.

2. Additive preparations according to Claim 1, characterised in that they contain 1 to 60 wt.% of additive and 99 to 40 wt.% of wax, wherein the sum of the constituents is 100 wt.%.

3. Additive preparations according to Claim 2, characterised in that they contain 35 to 55 wt.% of additive and 65 to 54 wt.% of wax, wherein the sum of the constituents is 100 wt.%.

4. Additive preparations according to one of Claims 1 to 3, characterised in that the wax(es) have a melting point of 50 to 120°C.

5. Additive preparations according to one of Claims 1 to 4, characterised in that the additives are light stabilisers, additives for improving the chargeability, anti-corrosive agents, catalysts, inhibitors, effect-providing agents, structural agents, bonding agents, matting agents, water-repellent agents, hydrophilic agents, agents for regulating the surface tension, dispersants, wetting agents, flow control agents, defoamers, degassers, anticrater agents, lubricants, polyacrylates, polymethacrylates, copolymers of (meth)acrylic acid derivatives, polyvinyl ether, dialkylpolysiloxanes, alkylarylpolysiloxanes or silicone polymers.

6. Additive preparations according to one of Claims 1 to 5, characterised in that the particles have a maximum size of 10 µm to 3 cm.

7. Additive preparations according to one of Claims 1 to 6, characterised in that they contain 0.1 to 5 wt.% of silica, with respect to the total weight of additives, wax and silica.

8. A process for preparing free-flowing additive preparations, in particular for powder coatings, characterised in that one or more liquid or viscous-tacky additives are incorporated into a wax melt consisting of one or more waxes, the mixture obtained is cooled to a temperature below its melting point and the solidified mixture is crushed or the still liquid mixture is converted into a finely divided form and the particles obtained are cooled.

9. A process according to Claim 8, characterised in that the mixture of additives and wax is cooled by spray-cooling.

10. A process according to Claim 8, characterised in that the mixture is cooled by means of a cooling belt or a cooled roller.

11. Use of free-flowing additive preparations which are obtainable by incorporating one or more liquid or viscous-tacky additives into a wax melt consisting of one or more waxes, cooling the mixture obtained to a temperature below its melting point and crushing the solidified mixture or converting the still liquid mixture into a finely divided form and cooling the particles obtained as additives in powder coatings.

## Revendications

1. Compositions d'additifs s'écoulant bien, en particulier pour des peintures en poudre, qui peuvent être obtenues en incorporant un ou plusieurs additifs liquides ou visco-adhésifs dans une fusion cireuse composée d'une ou plusieurs cires, en refroidissant le mélange ainsi obtenu à une température inférieure à son point de fusion et en broyant le mélange solidifié ou bien en transformant le mélange encore liquide sous une forme finement divisée et en refroidissant les particules ainsi obtenues.

2. Compositions d'additifs selon la revendication 1, caractérisées en ce qu'elles contiennent de 1 à 60 % en poids d'additif et de 99 à 40 % en poids de cire, la somme des éléments constitutifs étant égale à 100 % en poids.

3. Compositions d'additifs selon la revendication 2, caractérisées en ce qu'elles contiennent de 35 à 55 % en poids d'additif et de 65 à 45 % en poids de cire, la somme des éléments constitutifs étant égale à 100 % en poids.

4. Compositions d'additifs selon l'une des revendications 1 à 3, caractérisées en ce que les cires présentent un point de fusion de 50 à 120 °C.

5. Compositions d'additifs selon l'une des revendications 1 à 4, caractérisées en ce que les additifs sont des agents photoprotecteurs, des additifs d'amélioration de la capacité de charge, des agents de protection contre la corrosion, des catalyseurs, des inhibiteurs, des agents d'effets, des agents de structure, des promoteurs d'adhésion, des agents de matité, des agents hydrophobisants, des agents hydrophilisants, des additifs régulant la tension de surface, des agents dispersants, des agents mouillants, des agents nivelants, des agents antimousse, des agents de dégazage, des agents anticratères, des agents antifriction, des esters d'acide polyacrylique, des esters d'acide polyméthacrylique, des copolymères de dérivés d'acide (méth)acrylique), de l'éther polyvinylique, des dialkylpolysiloxanes, des alkylarylpolysiloxanes ou des polymères de silicone.

6. Compositions d'additifs selon l'une des revendications 1 à 5, caractérisées en ce que les particules présentent une dimension maximale de 10 µm à 3 cm.

7. Compositions d'additifs selon l'une des revendications 1 à 6, caractérisées en ce qu'elles contiennent de 0,1 à 5 % en poids d'acide silicique ramené au poids total des additifs, de la cire et de l'acide silicique.

8. Procédé de préparation de compositions d'additifs s'écoulant bien, en particulier pour des peintures en poudre, caractérisé en ce que l'on incorpore un ou plusieurs additifs liquides ou visco-adhésifs dans une fusion cireuse composée d'une ou plusieurs cires, on refroidit le mélange ainsi obtenu à une température inférieure à son point de fusion et on broie le mélange solidifié ou bien on transforme le mélange encore liquide sous une forme finement divisée et on refroidit les particules ainsi obtenues.

9. Procédé selon la revendication 8, caractérisé en ce que le mélange d'additifs et de cire est refroidi par un refroidissement par pulvérisation.

10. Procédé selon la revendication 8, caractérisé en ce que le mélange est refroidi à l'aide d'une bande refroidissante ou d'un cylindre refroidi.

11. Utilisation comme additifs dans des peintures en poudre de compositions d'additifs s'écoulant bien qui peuvent être obtenues en incorporant un ou plusieurs additifs liquides ou visco-adhésifs dans une fusion cireuse composée d'une ou plusieurs cires, en refroidissant le mélange ainsi obtenu à une température inférieure à son point de fusion et en broyant le mélange solidifié ou bien en transformant le mélange encore liquide sous une forme finement divisée et en refroidissant les particules ainsi obtenues.
